# EUROPÄISCHE PATENTSCHRIFT

(11) **EP 2 440 006 B1**
(45) Veröffentlichungstag und Bekanntmachung des Hinweises auf die Patenterteilung: **25.02.2015**
(21) Anmeldenummer: 10013475.8
(22) Anmeldetag: 08.10.2010
(51) Int. Cl.: H05B 3/50

(54) **Elektrische Heizvorrichtung**
Electric heating device
Dispositif de chauffage électrique

(43) Veröffentlichungstag der Anmeldung: 11.04.2012
(73) Patentinhaber: Eberspächer catem GmbH & Co. KG, 76863 Herxheim bei Landau (DE)
(72) Erfinder: Clauss, Maurice, 67150 Nordhouse (DE); Bohlender, Franz, 76870 Kandel (DE); Niederer, Michael, 76889 Kapellen-Drusweiler (FR)
(74) Vertreter: Grünecker, Kinkeldey, Stockmair & Schwanhäusser

(56) Entgegenhaltungen:
- EP-A1- 1 872 986
- EP-A1- 1 921 896
- EP-A1- 2 082 920
- WO-A1-2010/088405

## Beschreibung

Die vorliegende Erfindung betrifft eine elektrische Heizvorrichtung mit einem Gehäuse, welches eine von einem Medium durchströmbare Zirkulationskammer umschließt, in welche Heizrippen hineinragen, die jeweils mit einer U-förmigen Ausnehmung versehen sind, die sich zu einer einheitlichen Anschlusskammer öffnen, die von der Zirkulationskammer durch eine im Bereich der offenen Enden der U-förmigen Ausnehmungen vorgesehene Trennwand von der Zirkulationskammer getrennt ist, und wenigstens ein PTC-Heizelement in sich aufnimmt, welches in wärmeleitendem Kontakt an gegenüberliegenden Innenseiten der U-förmigen Ausnehmung anliegt.

Eine solche elektrische Heizvorrichtung ist aus der auf die Anmelderin zurückgehenden EP 1 872 986 A1 bekannt.

Der vorliegenden Erfindung liegt das Problem zugrunde, die gattungsgemäße elektrische Heizvorrichtung weiterzubilden. Die vorliegende Erfindung will insbesondere eine kompakt bauende elektrische Heizvorrichtung angeben, die verhältnismäßig einfach aufgebaut ist und auch bei hohen Arbeitsdrücken des zu erwärmenden Fluids betrieben werden kann.

Im Hinblick darauf schlägt die vorliegende Erfindung eine Heizvorrichtung mit den Merkmalen von Anspruch 1 vor. Diese unterscheidet sich von der gattungsgemäßen Heizvorrichtung durch einen Gehäusedeckel, der eine Pumpe trägt und einen Pumpkanal ausbildet, der in eine Einlassöffnung der Pumpe mündet, die durch ein Pumpgehäuse gebildet ist. Die erfindungsgemäße elektrische Heizvorrichtung ermöglicht dementsprechend das schlauchlose Anschließen der Pumpe an das Gehäuse. Das zu erwärmende Medium kann unmittelbar von der Zirkulationskammer in die Pumpe gelangen, ohne dass auf aufwendige Weise Schlauchstücke zwischen der Heizvorrichtung und der Pumpe montiert werden müssen, die störanfällig sind.

Bei der erfindungsgemäßen elektrischen Heizvorrichtung wird das Gehäuse, welches die Zirkulationskammer umschließt, mit einem Gehäusedeckel verschlossen, der in baulicher Einheit mit der Pumpe vorgesehen ist. Hierdurch wird eine kompakt bauende elektrische Heizvorrichtung gebildet. Auch ist es möglich, den Pumpkanal gegenüberliegend der Zirkulationskammer und getrennt durch eine relativ dünne Abdeckung bzw. Membran vorzusehen. Der hydrostatische Druck beiderseits dieser Membran gleicht sich dabei im Wesentlichen aus und der Aufbau ist insgesamt vereinfacht und gleichwohl insbesondere geeignet, mit hohen Fluiddrücken betrieben zu werden. Eine dünne Membran zwischen dem Pumpkanal und der Zirkulationskammer baut des Weiteren weniger dick auf, was den kompakten Aufbau weiter begünstigt.

Der erfindungsgemäß ausgebildete Gehäusedeckel bildet vorzugsweise jedenfalls Teile des Pumpgehäuses aus einem Block aus. Der Gehäusedeckel kann dabei als AluminiumDruckgussteil ausgebildet sein. Des Weiteren tragen das Pumpgehäuse und das Gehäuse vorzugsweise jeweils einen Anschlussstutzen, wobei der von dem Pumpgehäuse getragene Anschlussstutzen unmittelbar mit einer Pumpkammer der Pumpe kommuniziert, die zu erwärmendes Fluid in den Pumpkanal einpumpt bzw. aus diesem herausfördert. Ein Anschlussstutzen im Sinne der Erfindung dient insbesondere dem Anschluss eines Schlauches zur Führung des zu erwärmenden Fluids außerhalb des Gehäuses bzw. des Gehäusedeckels und zu weiteren Systemkomponenten, beispielsweise Wärmetauschern innerhalb eines Kraftfahrzeuges.

Das Gehäuse der elektrischen Heizvorrichtung ist vorzugsweise ein längliches Gehäuse, wobei der Anschluss an die Pumpe und/oder die Zirkulationskammer bevorzugt stirnseitig erfolgt, vorzugsweise jeweils durch Anschlussstutzen, die an der Stirnseite vorgesehen sind. An der dem Anschlussstutzen gegenüberliegenden Stirnseite befindet üblicherweise ein Steuergehäuse, welches die Steuerung vorzugsweise sowohl für das bzw. die PTC-Heizelemente wie auch die Pumpe in sich aufnimmt.

Gemäß einer bevorzugten Weiterbildung der vorliegenden Erfindung ist die zuvor erwähnte Membran durch ein Abdeckelement gebildet. Ein Abdeckelement im Sinne der Erfindung ist dichtend zwischen dem Gehäuse und dem Gehäusedeckel geklemmt und trennt dementsprechend einen in der Zirkulationskammer ausgebildeten Strömungskanal, der zwischen der Trennwand und dem Abdeckelement eingeschlossen ist, von dem Pumpkanal ab. Das Abdeckelement hat ferner eine Strömungsdurchgangsöffnung, durch welche der Strömungskanal mit dem Pumpkanal kommuniziert. Diese Strömungsdurchgangsöffnung ist vorzugsweise an einem stirnseitigen Ende des Gehäuses vorgesehen und nach Art einer Durchbrechung in dem Abdeckelement ausgeformt.

Das Abdeckelement kann innerhalb des Gehäuses allein durch die Klemmkraft zwischen dem Gehäusedeckel und dem Gehäuse im Randbereich der beiden Gehäuseteile gehalten sein. Auch ein relativ dünnes Abdeckelement wird wegen der im Wesentlichen gleichen hydrostatischen Druckverhältnisse beiderseits des Abdeckelementes in Position zwischen dem Gehäuse und dem Gehäusedeckel gehalten.

Es ist indes zu bevorzugen, an der Unterseite der Heizrippen verjüngte Stege auszubilden, deren Stirnseiten in einer Abstützebene für das Abdeckelement angeordnet sind. Der Gehäusedeckel hat hierzu korrespondierende Stützgegenstege. Zwischen den Stützstegen und den Stützgegenstegen wird dabei das Abdeckelement dichtend geklemmt. Diese Ausgestaltung bietet im Bereich der Stege bzw. Gegenstege eine relativ hohe Flächenpressung, die zu einer Abdichtung der Abdeckplatte führt, so dass das zu erwärmende Fluid auch mit relativ hohem Druck von mehr als 35 bar druckbeaufschlagt werden kann. Dabei ist es zu bevorzugen, den Pumpkanal in etwa mit der Breite der Heizrippen auszubilden, d.h. der gesamten Erstreckung der Stützstege in ihrer Längsrichtung Stützgegenstegen gegenüberzustellen, so dass beiderseits des flächigen Abdeckelementes druckbeaufschlagtes Fluid vorhanden ist. Hierdurch wird die Druckdifferenz an der abzudichtenden Fläche innerhalb des Gehäuses minimiert.

Die Stützstege sind verjüngt, d.h. haben eine Dicke, die geringer ist als die Dicke der Heizrippen. Als Dicke in diesem Sinne wird üblicherweise eine Ausdehnung verstanden, die rechtwinklig zu der Einbringrichtung der PTC-Heizelemente in die U-förmigen Ausnehmungen und rechtwinklig zu der Längserstreckung der PTC-Heizelemente verläuft. Die Heizrippen erstrecken sich üblicherweise quer zur Längserstreckung eines länglichen Gehäuses. Durch diese Stützstege ist das Abdeckelement in einer Abstützebene gegen das Gehäuse angelegt. Es ergibt sich eine gute Abdichtung der einzelnen, sich vorzugsweise parallel zueinander erstreckenden Strömungsabschnitte des mäandrierend ausgebildeten Strömungskanals und des Pumpkanals, der sich üblicherweise rechtwinklig zu den Hauptabschnitten des Strömungskanals erstreckt. Dementsprechend fließt das zu erwärmende Medium vollständig durch den Strömungsdurchgang. Eine Kurzschlussströmung, die das bodenseitige Ende der U-förmigen Ausnehmung überstreicht, wird verhindert. Die verjüngten Stege sind dünner als die Heizrippen, so dass auch eine Wärmeübertragung an das Medium im Bereich des Bodens der U-förmigen Ausnehmung erfolgen kann, was den thermischen Wirkungsgrad weiter verbessert.

Gemäß einer bevorzugten Weiterbildung der vorliegenden Erfindung ragen die Heizrippen alternierend von gegenüberliegenden Innenseiten des Gehäuses nach innen ab, und zwar derart, dass der Strömungskanal in dem Gehäuse mäandrierend ausgebildet ist und Strömungsdurchgänge zwischen den freien Enden der Heizrippen und der benachbarten Innenwand des Gehäuses umfasst. Bei dieser bevorzugten Weiterbildung, die einen hohen thermischen Wirkungsgrad der elektrischen Heizvorrichtung erlaubt, erfolgt die Strömungsumlenkung jeweils zwischen den freien Enden der Heizrippen und der benachbarten Seitenwand. Dabei wird die Strömung in dem Strömungskanal zur guten Wärmeübertragung gegen den Anschluss der in Strömungsrichtung folgenden Heizrippe an das Gehäuse angeströmt. Hierdurch ergibt sich eine gute Wärmübertragung auch an einem an das Gehäuse angebundenen Fuß der Heizrippe. Auch das freie Ende der Heizrippen wird angeströmt. Mit anderen Worten ergibt sich eine sehr gute Wärmeübertragung an das in der Heizvorrichtung zu erwärmende Medium nicht nur an gegenüberliegenden Längsseiten des PTC-Heizelementes, sondern auch an dessen Stirnseiten. Ein PTC-Heizelement besteht dabei üblicherweise aus einem oder mehreren beidseitig mit einer metallisierenden Beschichtung versehenen PTC-Keramiksteinen, an deren gegenüberliegenden Seitenflächen Blechbänder anliegen, die mit unterschiedlicher Polarität bestromt sind. Ein oder mehrere solcher PTC-Heizelemente sind in jeweils einer U-förmigen Ausnehmung aufgenommen. Diese U-förmige Ausnehmung ist zu einer Seite, nämlich zur Anschlusskammer hin offen; zur Unterseite ist die U-förmige Ausnehmung geschlossen. Dieser Verschluss der U-förmigen Ausnehmung kann aus einem anderen Material als dasjenige Material sein, durch welches das Gehäuse gebildet ist. Das Gehäuse sowie die Heizrippen werden üblicherweise aus einem Block gebildet. Hierbei handelt es sich üblicherweise um einen Gussblock. Vorzugsweise werden die Heizrippen und das Gehäuse einheitlich mittels Aluminiumdruckguss hergestellt. Die U-förmigen Ausnehmungen werden durch relativ steife Wandungen der Heizrippen begrenzt. Sie sind möglichst dünnwandig, um eine gute Wärmedurchleitung und -abgabe an das zu erwärmende Medium zu ermöglichen. Allerdings sind die gegenüberliegenden Seitenwände der Heizrippen dick und damit steif genug, so dass eine gute Anlage der PTC-Heizelemente an den Innenseiten der U-förmigen Ausnehmung gewährleistet werden kann.

Das PTC-Heizelement kann hierzu mit einer gut wärmeleitenden Vergussmasse oder dergleichen in der Ausnehmung fixiert sein. Vorzugsweise und mit Rücksicht auf eine einfache Herstellung der elektrischen Heizvorrichtung ist das PTC-Heizelement indes gemäß der Offenbarung der EP 1 872 986 oder, besonders bevorzugt gemäß EP 1 921 896 A1 ausgebildet. Beide Druckschriften werden durch Bezugnahme in den Offenbarungsgehalt dieser Anmeldungsunterlagen aufgenommen. Dies bedeutet, dass das PTC-Heizelement vorzugsweise auch ein Keilelement umfasst, welches gleitverschieblich relativ zu dem PTC-Stein und den daran anliegenden Blechbändern vorgesehen ist und durch welches eine gute Verspannung und thermische Kontaktierung zwischen dem PTC-Heizelement und den Innenseiten der U-förmigen Auslegungen erreicht werden kann. Wegen weiterer Einzelheiten dieses Keilelementes und dem Zusammenwirken mit dem PTC-Stein wird auf die Offenbarung der beiden zuvor genannten europäischen Patentanmeldungen verwiesen.

Die mäandrierende Strömungsführung in dem Gehäuse führt zu einem besseren thermischen Wirkungsgrad gegenüber einer aus der EP 1 872 986 A1 bekannten elektrischen Heizvorrichtung. Bei dieser erstrecken sich die U-förmigen Ausnehmungen in Hauptströmungsrichtung innerhalb des Gehäuses. Durch die permanente Umlenkung der Strömung durch die mäandrierende Strömungsführung wird eine laminare Strömung weitestgehend vermieden. Insbesondere werden die wärmeabgebenden Oberflächen der Heizrippen nicht mit einer Strömung angeströmt, die sich im Wesentlichen parallel zu der Oberfläche der Rippen erstreckt. Vielmehr wird durch Geschwindigkeitsanteile der Strömung rechtwinklig zu der Oberfläche der Rippen eine gute Wärmeabfuhr und -abgabe an das zu erwärmende Medium erreicht. Da die PTC-Heizelemente auch an beiden gegenüberliegenden Stirnseiten Wärme abgeben, ergibt sich eine gute Wärmeabfuhr der von den PTC-Heizelementen erzeugten Wärme und damit ein hoher thermischer Wirkungsgrad.

Dieser kann gemäß einer bevorzugten Weiterbildung weiter verbessert werden, bei welcher die Heizrippen über einen Steg mit der zugeordneten Innenwand des Gehäuses verbunden sind. Der Steg hat eine geringere Stärke als die zugeordnete Heizrippe. Dementsprechend wird die Heizrippe auch an ihrem fußseitigen Ende stirnseitig mit Fluid kontaktiert. Der Steg kann relativ dünn sein, so dass nicht unerhebliche Teile der fußseitigen Stirnseite der Heizrippe in der Strömung freiliegen.

Die Oberfläche und insbesondere die Querschnittsgestaltung des Steges können zur bestmöglichen Wärmeübertragung an dem fußseitigen Ende der Heizrippe angepasst ausgebildet werden. Eine besonders gute Ableitung von Wärme bei hinreichender Steifigkeit bietet eine Ausgestaltung, bei welcher die zu dem Strömungskanal freiliegenden Seitenflächen des Steges konkav gekrümmt sind, so dass sich zwischen der Seitenwand und der Heizrippe eine muldenförmige Ausbuchtung bildet. Bei dieser Ausgestaltung werden Kerben vermieden, die zu einer Schwächung des Materials führen. Es hat sich herausgestellt, dass in den Mulden die Wärmeübertragung an das zu erwärmende Medium begünstigende Strömungsbedingungen eingestellt werden, insbesondere dann, wenn die Mulde absatzfrei in eine die Innenseite des Gehäuses bildende Innenwand übergeht, die im Wesentlichen geradlinig zwischen gegenüberliegenden Mulden verläuft und mittig die äußere Begrenzung des Strömungsdurchgangs ausbildet.

Die kompakte Ausgestaltung der Heizvorrichtung wird dadurch weiter verbessert, dass eine sich im Wesentlichen parallel zu der Trennwand erstreckende und in der Anschlusskammer aufgenommene Anschlussleiterplatte vorgesehen ist. Diese Anschlussleiterplatte hat elektrische Anschlusselemente, die die Trennwand überragende Kontaktfahnen der PTC-Heizelemente kontaktieren und mit Leiterbahnen elektrisch verbunden sind, die durch die besagte Anschlussleiterplatte ausgebildet werden. Die Anschlussleiterplatte ist üblicherweise nicht mit elektronischen Bauteilen bestückt. Sie dient vielmehr lediglich dazu, PTC-Heizelemente elektrisch anzuschließen und zwar über deren Anschlussfahne. Dabei können die Leiterbahnen der Anschlussleiterplatte so ausgebildet sein, dass mehrere PTC-Heizelemente zu einer Gruppe zusammengeschlossen sind. Die PTC-Heizelemente der elektrischen Heizvorrichtung sind dabei vorzugsweise in mehreren Heizstufen gruppiert. Das Zusammenfassen der einzelnen PTC-Heizelemente in einer Heizstufe erfolgt üblicherweise ausschließlich über die Leiterbahnen der Anschlussleiterplatte. Diese kann darüber hinaus elektrisch mit einem Thermofühler verbunden sein, der üblicherweise im Bereich eines stirnseitigen Endes vorgesehen ist und in die Zirkulationskammer hineinragt. Dessen Temperatursignal wird üblicherweise ebenfalls über Leiterbahnen der Anschlussleiterplatte weitergeleitet, und zwar vorzugsweise auf die dem Thermofühler gegenüberliegende Stirnseite des Gehäuses. Dort befindet sich gemäß einer bevorzugten Weiterbildung der vorliegenden Erfindung eine mit Bauelementen bestückte Leiterplatte, in welcher die Steuer- bzw. Regelsignale für das Schalten der PTC-Heizelemente erzeugt werden. Die bestückte Leiterplatte befindet sich vor der Stirnseite des Gehäuses und ist üblicherweise mit Abstand zu dieser vorgesehen, so dass die auf der bestückten Leiterplatte vorgesehenen elektronischen Bauteile von dem Gehäuse beabstandet sind.

Die Anschlussleiterplatte weist üblicherweise an gegenüberliegenden Stirnseiten Leiterbahnen auf, die mit der Anschlussleiterplatte in elektrischer Verbindung stehen. Hierzu hat das Gehäuse gemäß einer bevorzugten Weiterbildung an seiner Stirnseite eine sich zu der Anschlusskammer öffnenden Gehäuseanschlussöffnung. In diese Gehäuseanschlussöffnung ist ein Steckergehäuse eingesetzt, dessen elektrische Steckelemente mit Steckgegenelementen verbunden sind, die an der Anschlussleiterplatte bzw. der bestückten Leiterplatte vorgesehen sind. Dementsprechend sind die beiden, sich im Wesentlichen rechtwinklig zueinander erstreckenden Leiterplatten mit Abstand zueinander vorgesehen. Die Anschlussleiterplatte ist hinsichtlich ihrer Erstreckung auf die Anschlusskammer beschränkt. Die bestückte Leiterplatte befindet sich ausschließlich stirnseitig vor dem Gehäuse.

Die Kontaktierung erfolgt vorzugsweise über elektrische Steckelemente eines Steckergehäuses, welches in das metallische Gehäuse eingesetzt und üblicherweise aus Kunststoff ausgebildet ist. Das Steckergehäuse ist vorzugsweise in eine Gehäuseanschlussöffnung eingesetzt, die bevorzugt an einer Stirnseite des Gehäuses ausgespart ist und sich zu der Anschlusskammer öffnet. Die elektrischen Steckelemente können ein- oder beidseitig mit Steckgegenelementen mittels Steckkontakt elektrisch verbunden sein. Üblicherweise weist zumindest die bestückte Leiterplatte Bohrungen auf, in welche die elektrischen Steckelemente eingebracht und elektrisch mit Leiterbahnen der bestückten Leiterplatte verbunden werden können. Das Gehäuse kann hierzu Auflageflächen für die elektrische Leiterplatte ausbilden, gegen welche diese angelegt wird. Die Leiterplatte kann aber auch in einem Steuergehäuse montiert sein. Bei dieser Ausgestaltung erfolgt die Steckkontaktierung der bestückten Leiterplatte mit den elektrischen Steckelementen üblicherweise beim Befestigen des Steuergehäuses an dem bzw. den Gehäusen.

Die bestückte Leiterplatte kann in an sich bekannter Weise elektronische Bauteile tragen und elektrisch kontaktieren, die Verlustleistung erzeugen. Im Hinblick auf die Abfuhr dieser Verlustleistung ist zwischen der Stirnseite des Gehäuses und der Leiterplatte gemäß einer bevorzugten Weiterbildung der vorliegenden Erfindung ein die Stirnseite thermisch mit dem Verlustleistung erzeugenden Bauteil koppelndes Kühlelement vorgesehen. Das Kühlelement ist üblicherweise dem die Verlustleistung erzeugenden Bauteil untergelegt. Das elektronische Bauteil kann sich unmittelbar über das Kühlelement oder unter Zwischenlage einer elektrischen Isolierlage an der Stirnseite des Gehäuses abstützen. Das Kühlelement wird vorzugsweise einteilig mit dem Gehäuse verwirklicht, besonders bevorzugt über einen die Stirnseite des Gehäuses überragenden Vorsprung.

Soweit die elektrische Heizvorrichtung eine bestückte Leiterplatte umfasst, die mit der Anschlussleiterplatte elektrisch verbunden ist und sich im Wesentlichen rechtwinklig zu dieser erstreckt, wird gemäß einer bevorzugten Weiterbildung der vorliegenden Erfindung vorgeschlagen, dass diese bestückte Leiterplatte auch Bauteile der Steuereinrichtung für die Pumpe trägt. Danach ist die Steuereinrichtung für die Pumpe sowie die Steuereinrichtung für die elektrische Heizvorrichtung im Wesentlichen vollständig auf einer Leiterplatte verwirklicht, die eine kompakte Ausgestaltung der elektrischen Heizvorrichtung begünstigt. Die bestückte Leiterplatte kann dabei nicht nur die Steuereinrichtung für die Pumpe ausbilden, sondern auch solche Steuerkreise für Heizkreise, die durch einen als Gehäuse ausgebildeten Gehäusedeckel bereitgestellt werden. Mit anderen Worten kann die bestückte Leiterplatte von vorneherein so ausgebildet sein, dass sie entweder die Pumpe steuern kann, sofern das Gehäuse mit einem den Pumpkanal ausbildenden Gehäusedeckel verschlossen wird, oder aber weitere Heizkreise eines Gehäusedeckels steuern kann, sofern dieser mit PTC-Heizelementen bestückt und nach Art eines Gehäuses ausgebildet ist.

Gemäß einer weiteren bevorzugten Ausgestaltung hat die elektrische Heizvorrichtung ein Steuergehäuse, welches die bestückte Leiterplatte umschließt und eine korrespondierend zu der Gehäuseanschlussöffnung ausgebildete Steuergehäuseanschlussöffnung ausformt. Die Gehäuseanschlussöffnung und die Steuergehäuseanschlussöffnung sind dabei vorzugsweise so ausgebildet, dass deren Ränder miteinander fluchten, so dass ein absatzfreier Durchgang von dem Steuergehäuse zu der Anschlusskammer möglich ist. Das Steuergehäuse hat bei dieser bevorzugten Weiterbildung eine weitere Steuergehäuseanschlussöffnung. Diese ist in Bezug auf eine das Abdeckelement aufnehmende Ebene spiegelsymmetrisch an dem Steuergehäuse ausgespart. Diese Ausgestaltung bietet zum Einen die Möglichkeit, dass das Steuergehäuse bei einem als Gehäuse ausgebildeten Gehäusedeckel eingesetzt werden kann. In diesem Fall erstrecken sich in der Steuergehäuseanschlussöffnung bzw. der Gehäuseanschlussöffnung jeweils die elektrischen Steckelemente des Steckergehäuses. Wenn lediglich ein Gehäuse an das Steckergehäuse angeschlossen wird, muss die elektrische Kontaktierung der Pumpe über die weitere Steuergehäuseanschlussöffnung erfolgen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine Explosionszeichnung eines ersten Ausführungsbeispiels;
- Figur 2: ein Mittellängsschnitt durch das in Figur 1 gezeigte Ausführungsbeispiel;
- Figur 3: eine Querschnittsansicht entlang der Linie III-III gemäß der Darstellung in Figur 2;
- Figur 4: perspektivische Ansichten der beiden Gehäuse mit den dazwischen vorgesehenen Abdeckelementen des zuvor diskutierten Ausführungsbeispiels;
- Figur 5: eine Explosionszeichnung eines zweiten Ausführungsbeispiels;
- Figur 6: einen teilweise geschnittene perspektivische Seitenansicht des zweiten Ausführungsbeispiels;
- Figur 7: eine Längsschnittsansicht des zweiten Ausführungsbeispiels;
- Figur 8: eine vergrößerte Längsschnittsansicht des Steuergehäuses des zweiten Ausführungsbeispiels;
- Figur 9: einen teilweise geschnittene perspektivische Seitenansicht des Steuergehäuses des zweiten Ausführungsbeispiels;
- Figur 10: eine Längsschnittsansicht des Steuergehäuses des zweiten Ausführungsbeispiels;
- Figur 11: eine Draufsicht auf das Steuergehäuse des zweiten Ausführungsbeispiels;
- Figur 12: eine Explosionszeichnung eines dritten Ausführungsbeispiels;
- Figur 13: eine Längsschnittsansicht des dritten Ausführungsbeispiels;
- Figur 14: eine perspektivische Seitenansicht eines vierten Ausführungsbeispiels und
- Figur 15: eine Längsschnittansicht des in Figur 14 gezeigten vierten Ausführungsbeispiels.

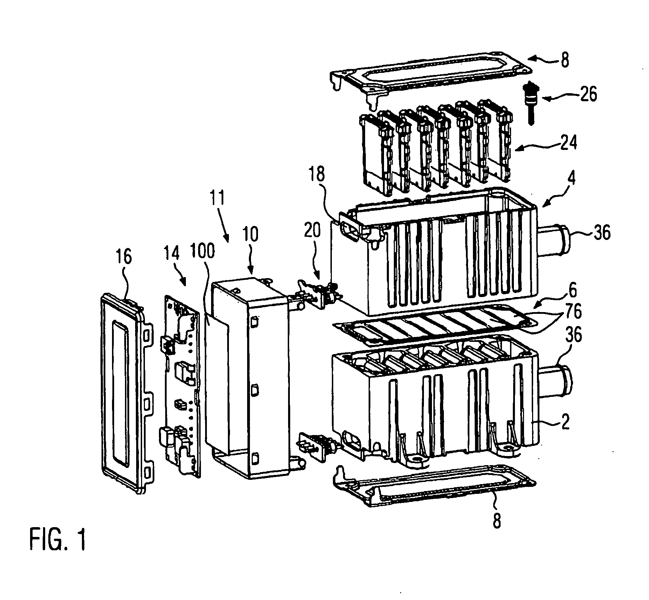

Die Figur 1 zeigt eine perspektivische Explosionszeichnung eines ersten Ausführungsbeispiels einer elektrischen Heizvorrichtung. Diese umfasst ein erstes Gehäuse 2 und ein hierzu im Wesentlichen spiegelbildlich ausgebildetes zweites Gehäuse 4, die unter Zwischenlage eines Abdeckelementes 6 miteinander verbunden und außenseitig jeweils über ein Gehäusedeckel 8 abgedeckt sind.

An einer gemeinsamen Stirnseite der beiden Gehäuse 2, 4 befindet sich ein mit Bezugszeichen 10 gekennzeichnetes Steuergehäuse einer Steuereinrichtung 11, welches einen Steuergehäuserahmen 12 hat, der eine bestückte Leiterplatte 14 in sich aufnimmt und mit einem Steuergehäusedeckel 16 verschlossen ist.

Die beiden Gehäuse 2, 4 weisen an ihrer dem Steuergehäuse 10 zugewandten Stirnseite jeweils eine Gehäuseanschlussöffnung 18 auf, die nahe des Gehäusedeckels 8 vorgesehen ist. In diese Steuergehäuseanschlussöffnung 18 ist jeweils ein Steckergehäuse 20 einbringbar, welches aus einem isolierenden Material, beispielsweise Kunststoff hergestellt ist und mehrere Steckelemente 22 trägt, die einen elektrischen Kontakt zwischen in den beiden Gehäusen 2, 4 vorgesehenen elektrischen Leiterbahnen und den Leiterbahnen der bestückten Leiterplatte 14 vermitteln.

In Figur 1 sind des Weiteren Heizplattenelemente 24 dargestellt, die leicht keilförmig ausgebildet sind und denjenigen PTC-Heizelementen entsprechen, die in der europäischen Patentanmeldung EP 1 921 896 A1 offenbart sind. Die Offenbarung dieser europäischen Patentveröffentlichung wird durch Bezugnahme in den Offenbarungsgehalt dieser Patentanmeldung aufgenommen.

Der Reihe der Heizplattenelemente/ PTC-Heizelemente 24 vorgelagert ist ein Temperaturfühler 26 gezeigt.

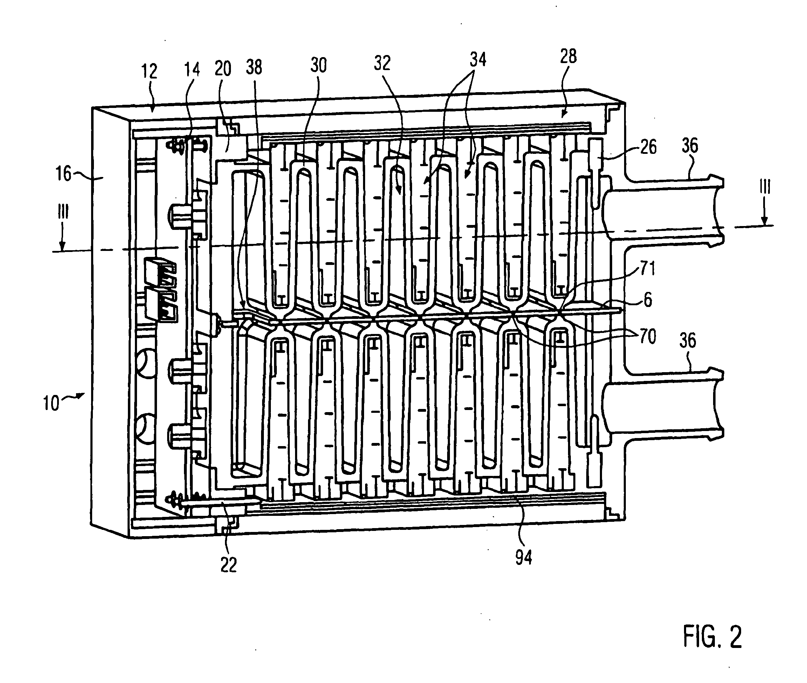

Der Einbau dieser Elemente in die Gehäuse 2, 4 ist insbesondere der Figur 2 zu entnehmen. Danach bilden die Gehäuse 2, 4 jeweils zwei unterschiedliche Kammern aus, nämlich zum Einen eine Anschlusskammer 28 und eine hiervon durch eine Trennwand 30 getrennte Zirkulationskammer. Von der Trennwand 30 gehen in die Zirkulationskammer 32 U-förmige Ausnehmungen 34 ab, die tief in die Zirkulationskammer 32 hineinragen und höhengleich mit der Trennwand 30 zu der Anschlusskammer 28 hin enden. Diese Ausnehmungen 34 sind derart bemessen, dass die Heizplattenelemente 24 mit einem von diesem umfassten Keil gegen die gegenüberliegenden Wandungen der U-förmigen Ausnehmungen 34 Wärme leitend eingesetzt werden können, wie dies die zuvor bereits erwähnte EP 1 821 896 A1 ausführlich beschreibt.

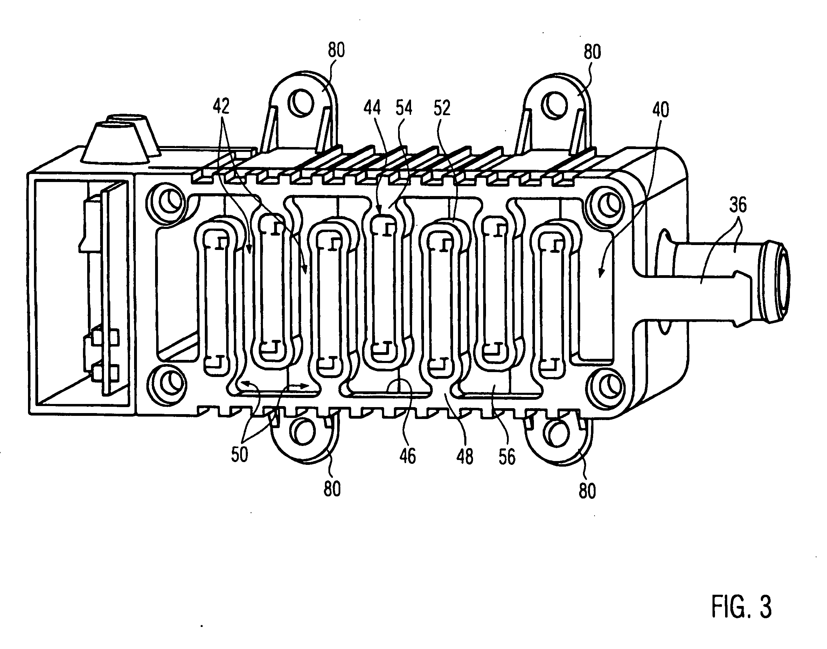

Die Zirkulationskammer 32 jedes einzelnen Gehäuses 2, 4 erstreckt sich zwischen einem Anschlussstutzen 36 zum Anschluss eines Fluidschlauches und einer Strömungsdurchgangsöffnung 38. Zwischen diesen beiden Ausgangs- bzw. Endpunkten der Zirkulationskammer 32 wird innerhalb dieser ein mäandrierender Strömungskanal 40 innerhalb des Gehäuses 2 bzw. 4 ausgebildet, dessen Verlauf insbesondere der Figur 3 zu entnehmen ist. Der Strömungskanal 40 hat Strömungskanalabschnitte 42, die sich rechtwinklig zu der Längserstreckung des Gehäuses 2 bzw. 4 erstrecken und jeweils begrenzt sind durch Außenwände von die U-förmigen Ausnehmungen 34 bildenden Heizrippen 44. Diese Heizrippen 44 sind alternierend an gegenüberliegenden Innenseiten 46 der Gehäuse 2, 4 angeordnet. Das Gehäuse 2 sowie die Heizrippen 44 sind dabei einheitlich an einem Aluminiumdruckgussteil verwirklicht. Befestigt sind die Heizrippen 44 an den gegenüberliegenden Innenseiten 46 des Gehäuses 2 bzw. 4 über einen Steg 48. Dieser Steg 48 hat eine geringere Dicke als die Heizrippen 44. Als Dicke in diesem Sinne ist die Erstreckung des Steges in einer Richtung rechtwinklig zu den Strömungskanalabschnitten 42, d.h. in Längsrichtung des Gehäuses 2 zu verstehen. Die zu dem Strömungskanal 40 frei liegenden Oberflächen der Stege 48 sind konkav ausgeformt, wodurch sich eine Ausbuchtung 50 als Teil des Strömungskanals 40 ergibt. In dem Strömungskanal 40 strömendes und zu erwärmendes Fluid kann dementsprechend einerseits die freien Enden 52 der Heizrippen 44 umströmen, andererseits aber auch jedenfalls einen erheblichen Teil des fußseitigen Endes 54, so dass die Heizrippen 44 sowohl über ihre gegenüberliegenden Längsseiten Wärme an das zu erwärmende Fluid abgeben können, als auch über ihre beiden Stirnseiten 52, 54. Dabei wird zwischen freien Enden 52 und der Innenseite 46 des Gehäuses ein Strömungsdurchgang 56 ausgebildet, der die jeweiligen Strömungskanalabschnitte 42 miteinander verbindet.

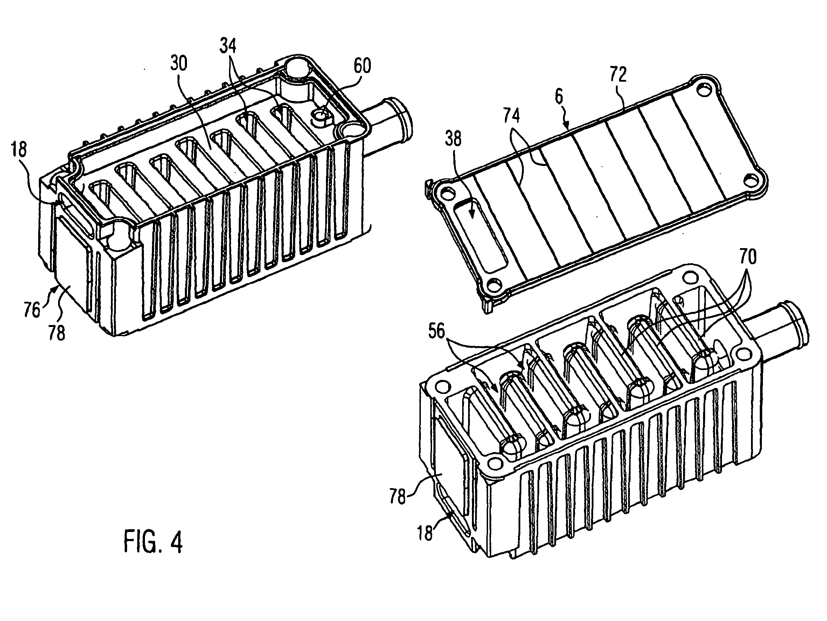

Die beiden in den Figuren 1 bis 3 gezeigten Gehäuse 2 sind identisch ausgebildet, so dass sich ein Strömungsweg durch zwei mäandrierend ausgebildete Strömungskanäle 40 zwischen den beiden Anschlussstutzen 36 ergibt. Die zuvor bereits beschriebenen Temperaturfühler 26 sind ebenfalls zweifach vorgesehen, und zwar unmittelbar im Bereich der Mündung der Anschlussstutzen 36. Hierzu sind in den jeweiligen Gehäusen 2, 4 Temperaturfühlerbohrungen 60 zur Aufnahme jeweils eines Temperaturfühlers 26 ausgespart (vgl. Figur 4).

Wie Weiterhin Figur 4 zu entnehmen ist, sind an der Unterseite der Heizrippen 44 verjüngte Stege 70 ausgebildet. Sämtliche verjüngten Stege 70 enden höhengleich und bilden eine Abstützebene für das Abdeckelement 6 aus. Dementsprechend ist das Abdeckelement zwischen den verjüngten Stegen 70 und Stützgegenstegen 71 der gegenüberliegenden Gehäuse 2, 4 dichtend geklemmt.

Das Abdeckelement 6 kann beispielsweise aus einem Metallblech gebildet sein, welches mit einem weichelastischen Kunststoff umspritzt ist, um einerseits einen umfänglichen Dichtrand 72 auszubilden, andererseits aber der mäandrierenden Struktur der verjüngten Stege 70 entsprechende Dichtstreifen, die in den Figur 1 und 4 dargestellt sind und die zwischen den einander gegenüberliegenden verjüngten Stegen 70 zur Anlage kommen. Der Dichtrand 72 wird zwischen den einander gegenüberliegenden Stirnseiten der Gehäuse 2, 4 geklemmt.

An den dem Steuergehäuse 10 zugewandten Stirnseiten haben die Gehäuse 2, 4 einen durch Fräsen ausgeformten Vorsprung, durch den jeweils ein Kühlelement 76 gebildet ist, welches eine sich parallel zu der Stirnseite erstreckende Kühlelement-Anlagefläche 78 ausbildet und dessen gegenüberliegende Oberfläche in der Zirkulationskammer in der Nähe der Strömungsdurchgangsöffnung 38 freiliegt (vgl. Figur 4).

Bei dem in den Figuren 1 bis 4 gezeigten Ausführungsbeispiel sind die Gehäusedeckel 8 üblicherweise aus gestanztem Metal gebildet. Auch diese können durch Umspritzen ausgeformte Dichtung aus einem elastischen Kunststoff tragen. Entsprechendes gilt für den Gehäusedeckel 16. Üblicherweise werden jedenfalls die Gehäusedeckel 8 durch Schrauben gegen die Gehäuse 2, 4 angelegt, welche Schrauben auch die beiden Gehäuse 2, 4 unter Zwischenlage des Abdeckelementes 6 gegeneinander fixieren und abdichten. Die Gehäuse 2, 4 sind identisch ausgebildet. In den Figuren 1 und 3 erkennbare Füße 80 können separat hergestellt und nachträglich an der Außenwandung des unteren Gehäuses 2 befestigt werden. Die Heizleistung der elektrischen Heizvorrichtung kann dadurch gesteigert werden, dass ein weiteres Paket von zwei Gehäusen 2, 4 neben das in den Figuren 1 bis 4 Gezeigte gesetzt wird. Die Steuerung der einzelnen Heizplattenelemente 24 kann durch eine einheitliche Steuerung mit einem einheitlichen Steuergehäuse bewirkt werden.

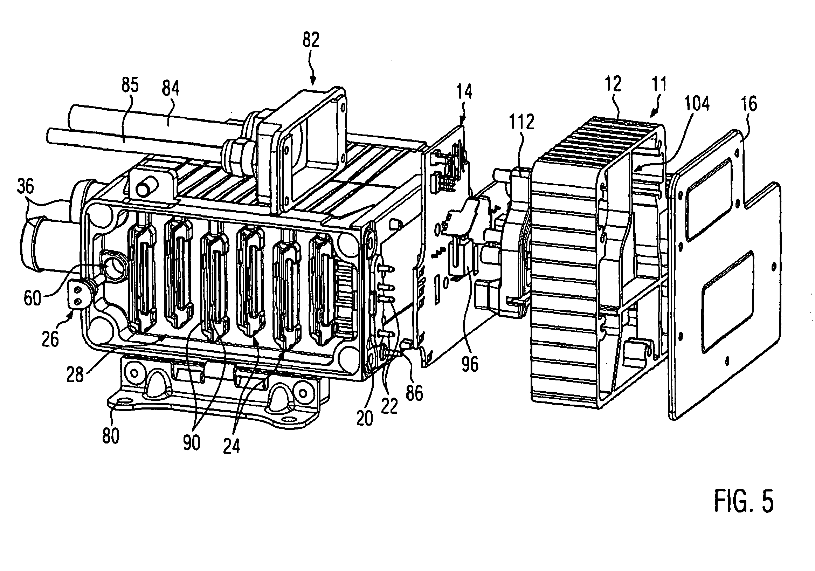

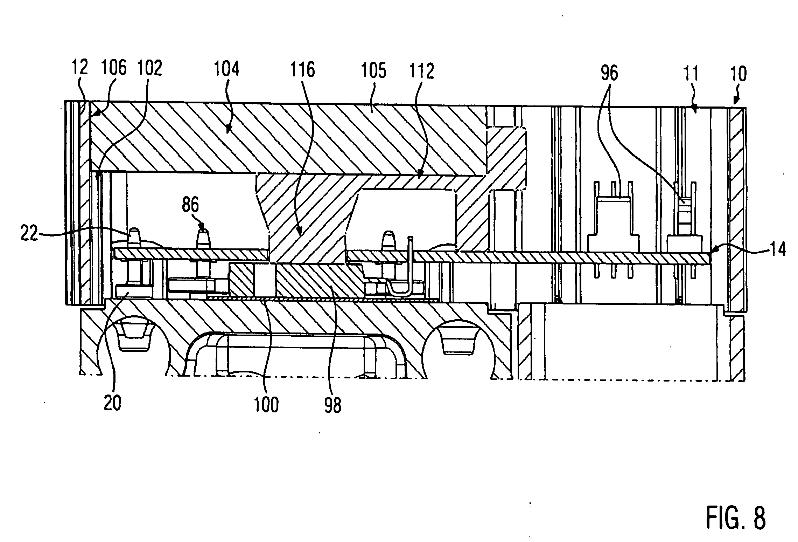

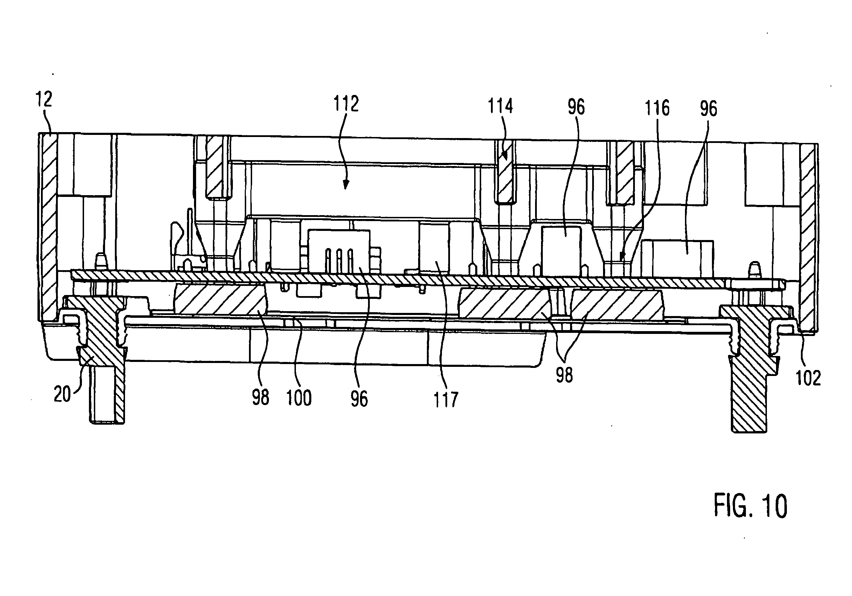

Die Figuren 5 bis 11 zeigen ein weiteres Ausführungsbeispiel einer erfindungsgemäßen Heizvorrichtung. Gleiche Bauteile sind gegenüber dem zuvor diskutierten Ausführungsbeispiel mit gleichen Bezugszeichen gekennzeichnet. Der Aufbau der Gehäuse 2, 4 der Zirkulationskammern 32 und der Anschlusskammern 28 ist im Wesentlichen identischen zu dem zuvor diskutierten Ausführungsbeispiel. Das Steuergehäuse 10 der Steuereinrichtung 11 überragt indes seitlich die beiden Gehäuse 2, 4 zur Befestigung eines Anschlussgehäuses 82, welches ein elektrisches Kabel 84 für den Leistungsstrom und ein elektrisches Kabel 85 für die Steuersignale trägt und abgedichtet in das Innere des Anschlussgehäuses 82 leitet. Im Bereich der mit Anschlussstutzen 36 ist jeweils ein mit den Gehäusen 2 bzw. 4 elektrisch kontaktiertes Kontaktelement 86 vorgesehen, welches eine Überprüfung der Polarität der beiden Gehäuse 2, 4 erlaubt, um einen eventuellen Fehler in der elektrischen Isolation der Gehäuse 2 bzw. 4 von den stromführenden Pfaden zu detektieren. Von diesem weiteren Kontaktelement 86 ist in Figur 5 jedenfalls das anschlussseitige Ende gezeigt.

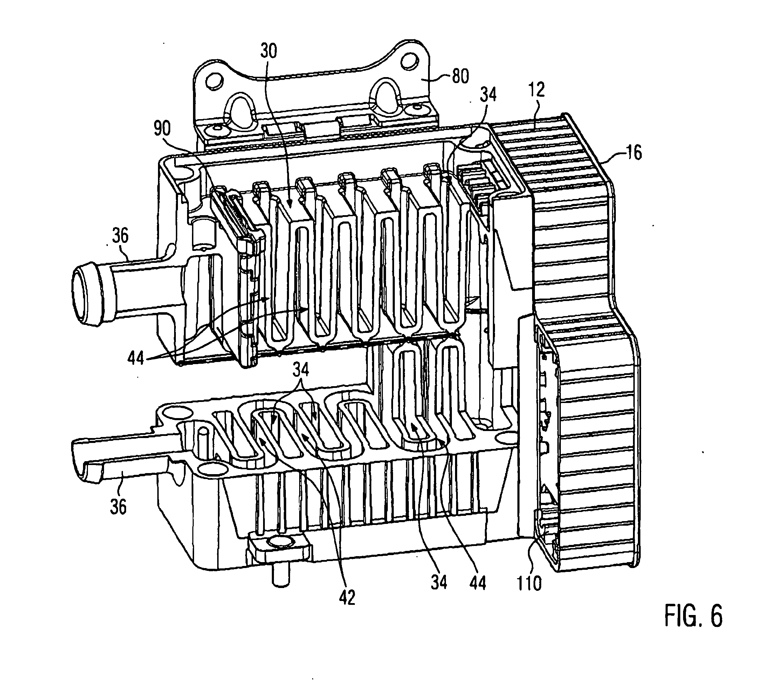

Die in Figur 6 weggenommenen Teile des Ausführungsbeispiels verdeutlichen den Strömungsweg innerhalb der Gehäuse 2, 4 sowie die Ausgestaltung der Heizrippen 44 und der darin ausgesparten U-förmigen Ausnehmungen 34.

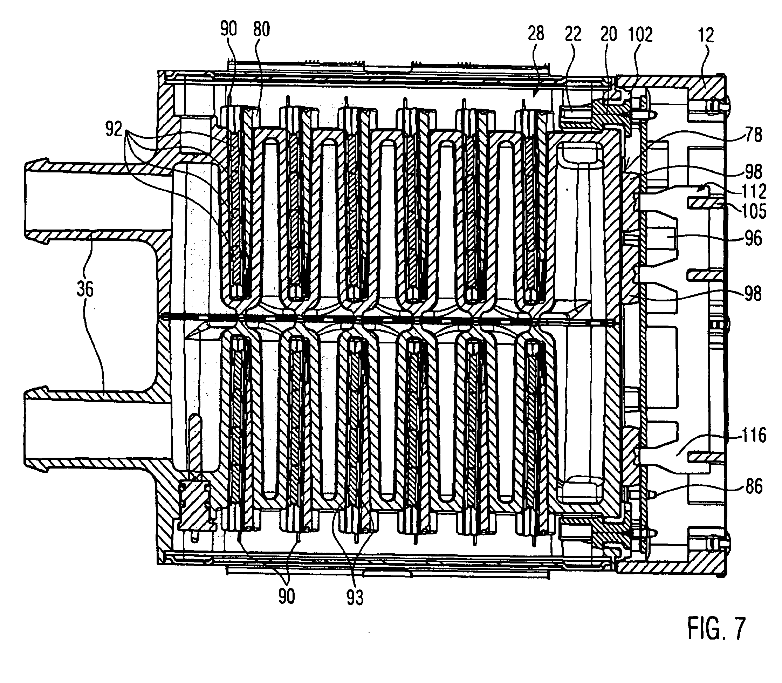

Wie Figur 6 des Weiteren zu entnehmen ist, haben die Heizplattenelemente 24 einen verbreiterten Kragen 88, der auf der Oberseite der Trennwand 30 aufliegt, so dass die Heizplattenelemente 24 mit vorbestimmter Tiefe in die U-förmigen Ausnehmungen 34 hineinragen. Dieser Kragen 88 wird oberseitig durch Kontaktfahnen 90 der Heizplattenelementen 24 überragt. Diese Kontaktfahnen 90 sind freigeschnittene Enden von elektrisch leitenden Blechplatten, die beiderseits an PTC-Steinen 92 anliegen, diese mit unterschiedlicher Polarität bestromen können und in Figur 7 zeichnerisch dargestellt und mit Bezugszeichen 93 gekennzeichnet sind. Es sind vier PTC-Steine 92 übereinander von jedem Heizplattenelement 24 umfasst. Wie gleichfalls Figur 7 zu entnehmen sind, liegen die Kontaktfahnen 90 auf gleicher Ebene innerhalb der Anschlusskammer 28 frei. In dieser Ebene liegt auch das anschlussseitige Ende des Temperaturfühlers 26 frei.

In der Anschlusskammer 28 befindet sich eine Anschlussleiterplatte, auf deren Darstellung in Figur 7 verzichtet wurde, die aber in Figur 2 mit Bezugszeichen 94 gekennzeichnet ist. Die Anschlussleiterplatte 94 erstreckt sich im Wesentlichen parallel zu der Trennwand 30 und liegt auf dem Kragen 88 auf. Sie bildet elektrische Anschlusselemente aus zur Aufnahme der einzelnen Kontaktfahnen 90 sowie eine Kontaktaufnahme für die Anschlussseite des Temperaturfühlers 26. Auf der dem Temperaturfühler 26 gegenüberliegenden Stirnseite hat die Anschlussleiterplatte 94 elektrische Anschlussaufnahmen zur Kontaktierung der in der Anschlusskammer 28 freiliegenden Steckelemente 22. Die Anschlussleiterplatte 94 sowie die elektrischen Anschlusselemente davon sind dabei so ausgestaltet, dass sämtliche elektrische Verbindungen zu der Anschlussleiterplatte 94 bewirkt werden, wenn die Anschlussleiterplatte 94 auf die Kragen 88 aufgelegt wird. Damit sind die elektrischen Steckkontakte in der Anschlusskammer 28 elektrisch mit den Steckelementen 22 verbunden.

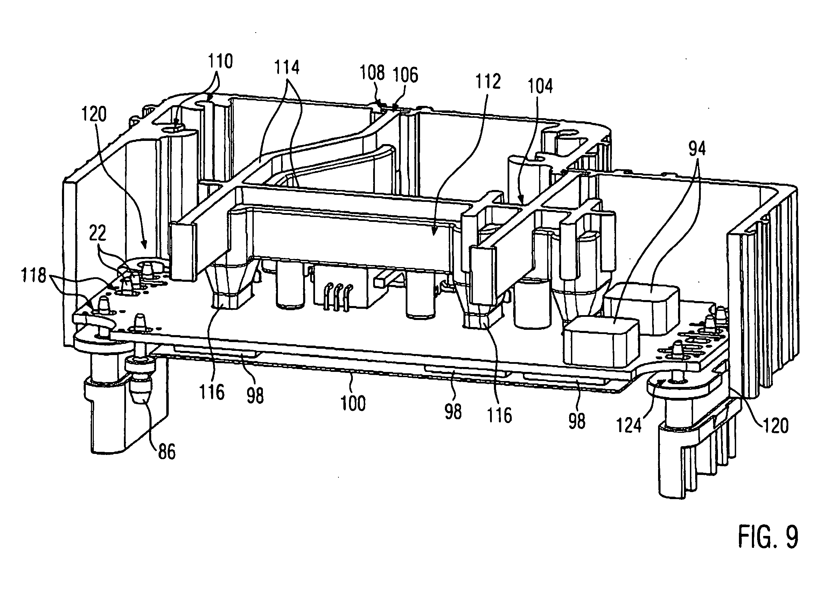

Nachfolgend wird der Aufbau der Steuereinrichtung 11 insbesondere unter Bezugnahme auf die Figuren 7 bis 11 beschrieben. Die bestückte Leiterplatte 14 trägt auf ihrer den Gehäusen 2, 4 abgewandten Oberfläche verschiedene elektrische bzw. elektronische Bauelemente 96. Auf der gegenüberliegenden, den Gehäusen 2, 4 zugewandten Unterseite der bestückten Leiterplatte 14, sind Verlustleistung erzeugende Bau- bzw. Steuerelemente 98, insbesondere Leistungstransistoren vorgesehen. Zwischen diesen Leistungstransistoren 98 und der Kühlelementanlagefläche 78 ist eine elektrische Isolierlage 100 vorgesehen. Diese Isolierlage 100 befindet sich in einer Aussparung eines Steuergehäusebodens 102 aus einem flexiblen Material, insbesondere aus einem weichelastischem Kunststoff, der zwischen der dem Gehäuse 2 bzw. 4 zugewandten Stirnseite des Steuergehäuserahmens 12 und der Stirnseite der Gehäuse 2, 4 geklemmt ist. Dieser Steuergehäuseboden 102 hat Aufnahmen, in welche die Steckergehäuse 20 eingebracht sind. Die Steckergehäuse 20 haben Flansche, die den Steuergehäuseboden 102 ober- und unterseitig fassen (vgl. Figuren 7, 9). Der Steuergehäuseboden 102 ragt hülsenförmig in die Steuergehäuseanschlussöffnungen 18 herein, wodurch eine sichere Halterung und Abdichtung der Steckergehäuse 20 gegeben ist (vgl. Figur 7). Das Innere des Steuergehäuses 10 ist dementsprechend gegenüber der Anschlusskammer 28 abgedichtet.

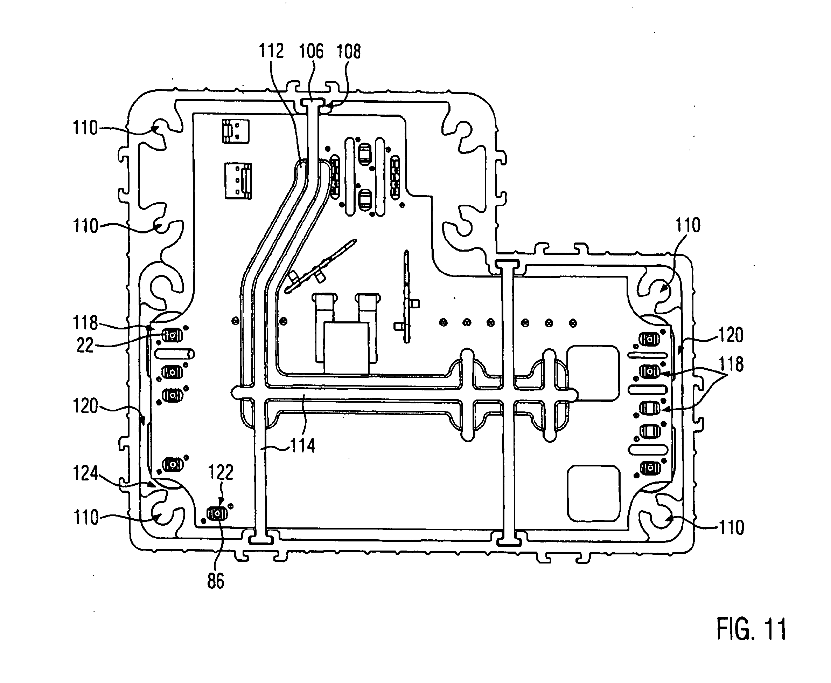

Wie insbesondere die Figuren 9 und 11 erkennen lassen, befindet sich innerhalb des Steuergehäuserahmens 12 eine Tragwerkstruktur 104, die als separates Bauteil, gebildet aus dünnen die Tragwerkstruktur 104 bildenden Stegen 105 hergestellt ist. Die Enden der Stege 105 sind nahe des Steuergehäuserahmens 12 zu einem Hammerkopf 106 verdickt. Der Hammerkopf 106 ist in Aufnahmeschlitzen 108 gehalten, die an der Innenwandung des Steuergehäuserahmens 12 durch diesen ausgebildet sind.

Unter anderem in den Eckbereichen sind an dem Steuergehäuserahmen 12 Befestigungsvorsprünge in Form von Befestigungsaugen 110 ausgebildet, deren Längserstreckung der Höhe des Steuergehäuserahmens 12 entspricht. Diese Augen sind nicht umfänglich geschlossen, sondern mit einem sich zum Inneren des Steuergehäuserahmens 12 hin öffnenden Schlitz versehen. Die Befestigungsaugen 110 dienen der Halterung von Gewindestangen, welche den Steuergehäuserahmen 12 unter Einschluss des Steuergehäusedeckels 16 mit den Gehäusen 2, 4 verbinden. Sie dienen aber auch der Aufnahme von Gewindestangen, die das Anschlussgehäuse 82 an dem Steuergehäuserahmen 12 befestigen.

Zwischen der Tragwerkstruktur 104 und der bestückten Leiterplatte 14 ist ein mit Bezugszeichen 112 gekennzeichnetes Kompressionselement aus einem weichelastischen Kunststoff vorgesehen. Dieses Kompressionselement 112 bildet an seiner der Tragwerkstruktur 104 zugewandten Stirnseite U-förmige Ausnehmungen für die Stege 105 der Tragwerkstruktur 104 aus, so dass das Kompressionselement 112 formschlüssig an der Tragwerkstruktur 104 gehalten ist. Das Kompressionselement 112 ist ebenfalls gitterartig ausgebildet, wobei Gitterstege 114 des Kompressionselementes 112 von Stützpfeilern 116 des Kompressionselementes 112 überragt werden, die an der bestückten Leiterplatte 14 korrespondierend hierzu ausgebildeten Aussparungen eingreifen und unmittelbar an den die Verlustleistung erzeugenden Steuerkomponenten 98 anliegen. Die Stützpfeiler 116 sind dort vorgesehen, wo auf der den Stützpfeilern 116 gegenüberliegenden Seite der bestückten Leiterplatte 14 die Verlustleistung erzeugenden Steuerkomponenten 98 angeordnet sind. Von dem Kompressionselement 112 und/oder den Gitterstegen 114 gehen ein oder mehrere Niederhalter 117 ab, die gegen die Leiterplatte 14 wirken.

Wie Figur 11 erkennen lässt hat die bestückte Leiterplatte 14 des Weiteren Kontaktelementaufnahmen 118, die an gegenüberliegenden Randbereichen 120 der bestückten Leiterplatte 14 ausgespart sind. Die Kontaktelementaufnahmen 118 sind als Langlöcher ausgebildet. Auch eine weitere Kontaktaufnahme 122 für das Kontaktelement 86 ist als Langloch ausgebildet. Sämtliche Langlöcher haben sich parallel zueinander erstreckende Längsachsen. In den Kontaktelementaufnahmen 118 sind Steckgegenelemente 119 angeordnet. Die bestückte Leiterplatte 14 ist mit geringem Spiel innerhalb des Steuergehäuserahmens 12 fixiert. In Eckbereichen der bestückten Leiterplatte 14 sind Freischnitte 124 vorgesehen, wodurch die Befestigungsaugen 110 in ihrer Längsrichtung durch die Ebene der bestückten Leiterplatte 14 hindurch durchgängig sind.

Zur Montage wird üblicherweise die Steuereinrichtung 11 zunächst vormontiert, d.h. die bestückte Leiterplatte 14 wird innerhalb des Steuergehäuserahmens 12 angeordnet. Die Steckergehäuse 20 werden durch die Aussparungen des Steuergehäusebodens 102 hindurchgesteckt und damit verbunden. Danach unter Zwischenlage der Isolierlage 100 die so vormontierte Steuereinrichtung 10 auf die Gehäuse 2, 4 aufgeschoben. Dabei werden die Steckergehäuse 20 in die Gehäuseanschlussöffnungen 18 dichtend eingebracht. Die Steckelemente 22 können hierbei aufgrund der Ausgestaltung der Kontaktaufnahmen 118 als Langlöcher eine gewisse Ausgleichsbewegung vollziehen, ohne dass der elektrische Kontakt zwischen diesen Steckelementen 22 und den Steckgegenelementen 119 der bestückten Leiterplatte 14 verloren geht. Danach wird der Steuergehäuserahmen 12 zusammen mit dem Steuergehäusedeckel 16 gegen die Gehäuse 2, 4 verschraubt. Dabei legen sich zunächst die Oberflächen der Verlustleistung erzeugenden Steuerkomponenten 98 gegen die Kühlelement-Anlageflächen 78 an. Nach der Montage des Steuergehäuses 10 an den Gehäusen 2, 4 sind die Verlustleistung erzeugenden Steuerkomponenten 98 unter Vorspannung an die gehäuseseitigen Kühlelemente 76 angelegt und damit zuverlässig wärmeleitend verbunden. Im Rahmen dieser Montage werden insbesondere die Stützpfeiler 116 der Kompressionselemente 112 elastisch komprimiert, wodurch in dem Kompressionselement 112 eine elastische Vorspannung gespeichert wird.

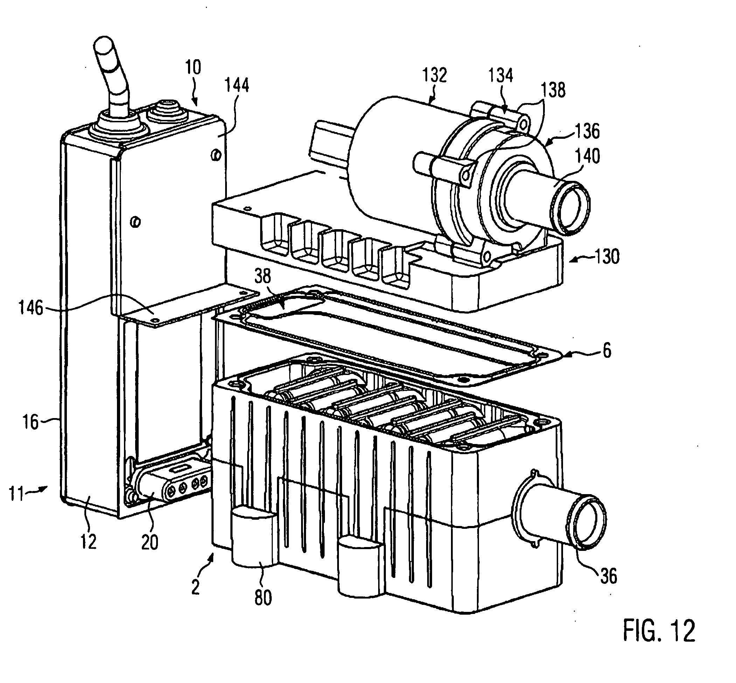

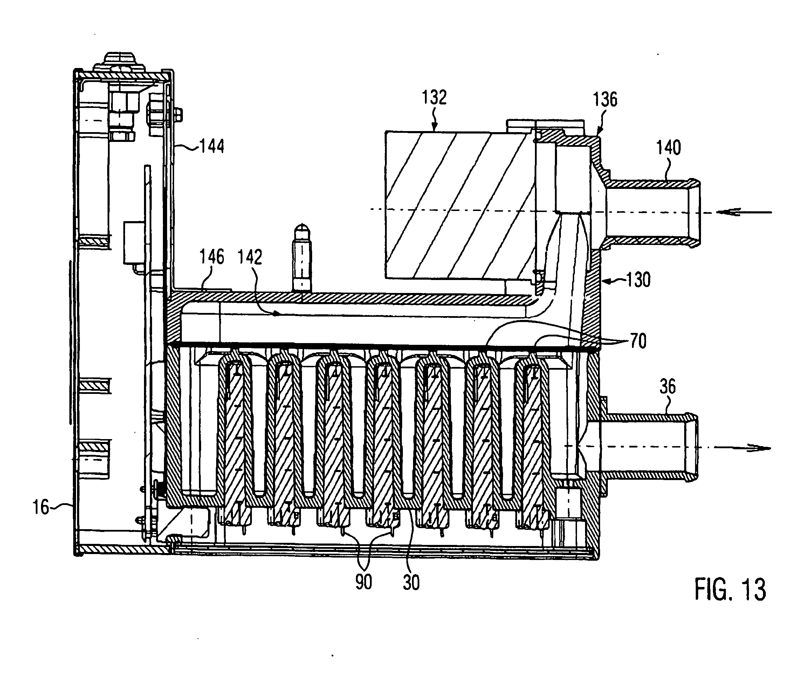

Die Figuren 12 und 13 zeigen ein weiteres Ausführungsbeispiel einer erfindungsgemäßen elektrischen Heizvorrichtung. Gleiche Bauteile sind gegenüber den zuvor diskutieren Ausführungsbeispielen mit gleichen Bezugszeichen gekennzeichnet.

Das Ausführungsbeispiel nach den Figuren 12 und 13 hat lediglich ein Gehäuse 2, welches mit einem Abdeckelement 6 zur Ausbildung der Zirkulationskammer 32 zwischen dem Abdeckelement 6 und der Trennwand 30 versehen ist. Das Ausführungsbeispiel hat ferner einen Gehäusedeckel 130, der eine Pumpe 132 trägt und jedenfalls teilweise ein Pumpengehäuse 134 ausbildet. Dabei formt der Gehäusedeckel 130 ein Strömungseinlassgehäuseteil 136 aus, welches Befestigungselemente 138 zum Anflanschen der Pumpe 132 sowie einen Schlauchanschlussstutzen 140 ausformt. Das Abdeckelement 6 hat lediglich an seiner dem Gehäuse 2 zugewandten Unterseite Dichtstreifen 74 entsprechend der Struktur der verjüngten Stege 70. Auf der gegenüberliegenden Oberseite sind entsprechend einem durch den Gehäusedeckel 130 ausgebildeten Pumpkanal 142 verlaufende Dichtstreifen 74 auf dem Abdeckelement 6 vorgesehen. Dieser Pumpkanal 142 verbindet die Strömungsdurchgangsöffnung 38 mit dem Strömungseinlassgehäuseteil 136.

Der Steuergehäuserahmen 12 ist identisch zu dem unter Bezugnahme auf die Figuren 1 bis 4 diskutierten Ausführungsbeispiel ausgeformt. Allerdings ist der Steuergehäuserahmen durch eine Steuergehäusebodenabdeckung 144 teilweise verschlossen, die einen umbogenen Flansch 146 ausformt, der auf die Oberseite des Steuergehäusedeckels 130 aufgeschraubt wird.

Die strommäßige Versorgung und der steuerungsmäßige Anschluss der Pumpe 132 erfolgt vorzugsweise ebenfalls über die bestückte Leiterplatte 12. Bei dem in den Figuren 12 und 13 gezeigten Ausführungsbeispiel erfolgt dies über ein Kabel, welches die Steuereinrichtung 11 mit der Pumpe 132 verbindet. Bei dem in den Figuren 12 und 13 gezeigten Ausführungsbeispiel erstreckt sich das (nicht dargestellte) Kabel von einer Seitenfläche des Steuergehäuserahmens 12 zu der Pumpe 32. Ebenso gut kann allerdings auch ein Steckergehäuse 20 auf Höhe der Pumpe 132 vorgesehen sein, über welches der elektrische Anschluss der Pumpe 132 erfolgt.

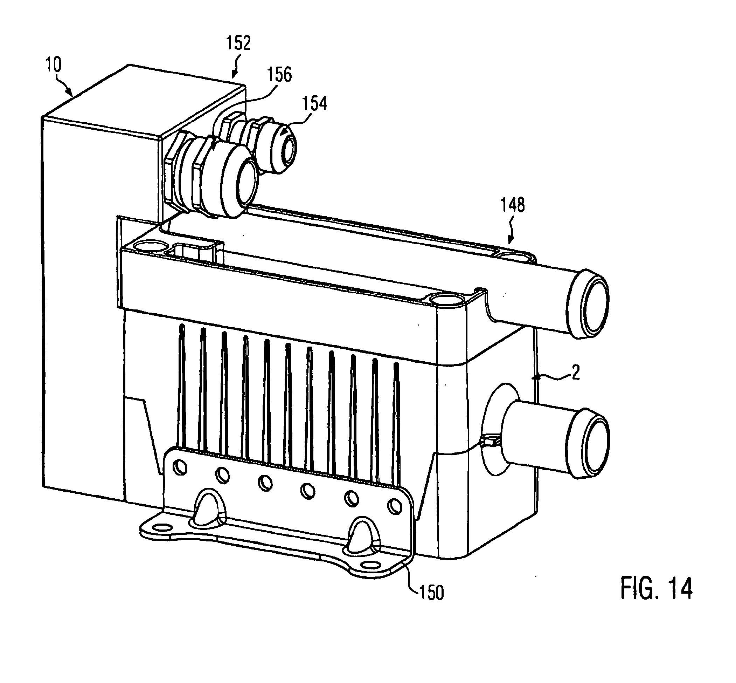

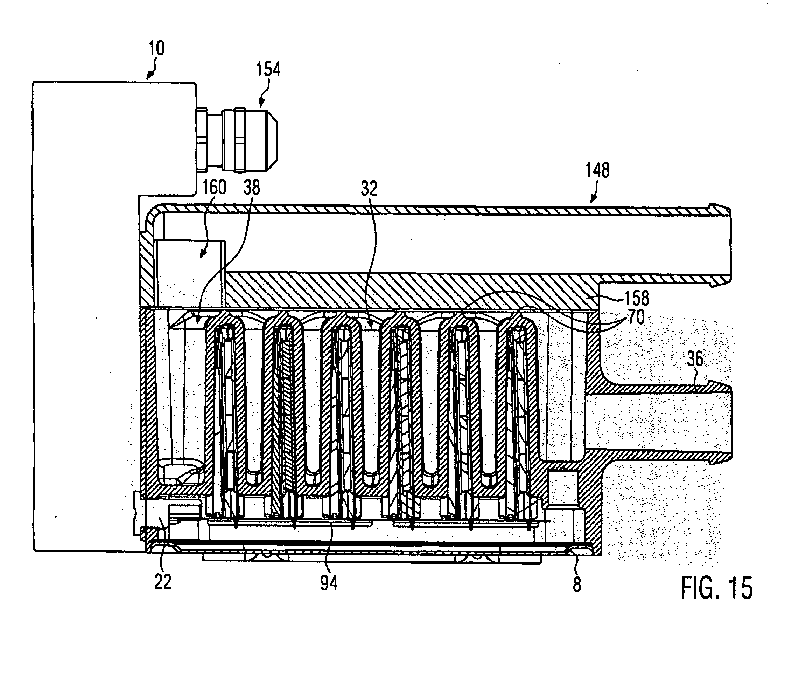

Die Figuren 14 und 15 zeigen ein viertes Ausführungsbeispiel. Gleiche Bauteile sind gegenüber dem zuvor Diskutierten mit gleichen Bezugszeichen gekennzeichnet.

Wie die zuvor beschriebenen Ausführungsbeispiele umfasst das vierte Ausführungsbeispiel ein Gehäuse 2, welches mit einem Gehäusedeckel 148 verbunden ist und an dessen Längsseiten Befestigungsflansche 150 zur Befestigung der elektrischen Heizvorrichtung angebracht sind. An einer Stirnseite des Gehäuses 2 und des Gehäusedeckels 148 befindet sich das Steuergehäuse 10 mit der darin aufgenommenen und in den Figuren 14 und 15 nicht detaillierten Steuerung. Dieses Steuergehäuse 10 ist vorliegend L-förmig ausgebildet mit einem den Gehäusedeckel 148 geringfügig überragenden Überhang 152, an dessen Stirnseiten zwei Kabelklemmen 154, 156 zur verdreh- und zugsicheren Halterung und Abdichtung von Kabeln montiert sind. Die Kabelklemme 154 dient zum Anschluss eines Steuerungskabels; die größere Kabelklemme 156 zum Anschluss eines Kabels für den Leistungsstrom. Das Gehäuse 2 ist identisch wie die zuvor beschriebenen Gehäuse 2 ausgebildet. Auf die obige Beschreibung wird insofern verwiesen.

Der Gehäusedeckel 148 weist eine auf dem Gehäuse 2 aufliegende Bodenplatte 158 auf, die mit dem Rand des Gehäuses 2 und den verjüngten Stegen 10 unter Einschluss des Abdeckelementes 6 zusammenwirkt, wodurch die Zirkulationskammer 32 im Bereich der verjüngten Stege 70 abgedichtet ist. In Strömungsrichtung hinter der Strömungsdurchgangsöffnung 38 bildet der Gehäusedeckel 148 einen Strömungsdurchgang 160 aus, der mit einem einteilig an dem Gehäusedeckel 148 ausgeformten Rohr 162 kommuniziert, welches sich parallel zu dem Anschlussstutzen 136 erstreckt und im Wesentlichen höhengleich mit diesem endet.

Das in den Figuren 14 und 15 gezeigte Ausführungsbeispiel ist relativ klein und hat eine Wärmeleistung von nicht mehr als 3 kW, üblicherweise eine Wärmeleistung von zwischen 1, 5 und 2,8 kW. Das Ausführungsbeispiel eignet sich beispielsweise zur Batterievorwärmung bei Elektrofahrzeugen.

### Bezugszeichenliste

- 2: erstes Gehäuse
- 4: zweites Gehäuse
- 6: Abdeckelement
- 8: Gehäusedeckel
- 10: Steuergehäuse
- 11: Steuereinrichtung
- 12: Steuergehäuserahmen
- 14: bestückte Leiterplatte
- 16: Steuergehäusedeckel
- 18: Gehäuseanschlussöffnung
- 20: Steckergehäuse
- 22: Steckelement
- 24: Heizplattenelement/PTC-Heizelement
- 26: Temperaturfühler
- 28: Anschlusskammer
- 30: Trennwand
- 32: Zirkulationskammer
- 34: U-förmige Ausnehmung
- 36: Anschlussstutzen
- 38: Strömungsdurchgangsöffnung
- 40: Strömungskanal
- 42: Strömungskanalabschnitt
- 44: Heizrippen
- 46: Innenseite
- 48: Steg
- 50: Ausbuchtung
- 52: freies Ende der Heizrippe
- 54: fußseitiges Ende der Heizrippe
- 56: Strömungsdurchgang
- 60: Temperaturfühlerbohrung
- 70: verjüngter Steg
- 72: Dichtrand
- 74: Dichtstreifen
- 76: Kühlelement
- 78: Kühlelement-Anlagefläche
- 80: Fuß
- 82: Anschlussgehäuse
- 84: elektrisches Kabel für den Leistungsstrom
- 85: elektrisches Kabel für die Steuersignale
- 86: Kontaktelement
- 88: Kragen
- 90: Kontaktfahne
- 92: PTC-Stein
- 93: Blechplatte
- 94: Anschlussleiterplatte
- 96: elektrisches Bauelement
- 98: Verlustleistung erzeugende Steuerkomponente
- 100: Isolierlage
- 102: Steuergehäuseboden
- 104: Tragwerkstruktur
- 105: Steg der Tragwerkstruktur
- 106: Hammerkopf
- 108: Aufnahmeschlitz
- 110: Befestigungsaugen
- 112: Kompressionselement
- 114: Gittersteg
- 116: Stützpfeiler
- 117: Niederhalter
- 118: Kontaktelementaufnahme
- 119: Steckgegenelemente
- 120: Randbereich
- 122: Kontaktaufnahme
- 124: Freischnitt
- 130: Gehäusedeckel
- 132: Pumpe
- 134: Pumpengehäuse
- 136: Strömungseinlassgehäuseteil
- 138: Befestigungselement
- 140: Schlauchanschlussstutzen
- 142: Pumpkanal
- 144: Steuergehäusebodenabdeckung
- 146: Flansch
- 148: Gehäusedeckel
- 150: Befestigungsflansch
- 152: Überhang
- 154: Kabelklemme
- 156: Kabelklemme
- 158: Gehäuseboden
- 160: Strömungsdurchgang
- 162: Rohr

## Patentansprüche

1. Elektrische Heizvorrichtung insbesondere für ein KFZ, mit einem Gehäuse (2, 4), welches eine von einem Medium durchströmbare Zirkulationskammer (32) umschließt, in welche Heizrippen (44) hineinragen, die jeweils mit einer U-förmigen Ausnehmung (34) versehen sind, die sich zu einer einheitlichen Anschlusskammer (28) öffnen, die von der Zirkulationskammer (32) durch eine im Bereich der offenen Enden der U-förmigen Ausnehmungen (34) vorgesehene Trennwand (30) von der Zirkulationskammer (32) getrennt ist und wenigstens ein PTC-Heizelement (24) in sich aufnimmt, welches in wärmeleitendem Kontakt an gegenüberliegenden Innenseiten (46) der U-förmigen Ausnehmung (34) anliegt,
**gekennzeichnet durch**
einen Gehäusedeckel (148) der eine Pumpe (132) trägt und einen Pumpkanal (142) ausbildet, der in eine Einlassöffnung der Pumpe (132) mündet, die **durch** ein Pumpgehäuse (134) gebildet ist.

2. Elektrische Heizvorrichtung nach Anspruch 1, **dadurch gekennzeichnet, dass** zwischen dem Gehäuse (2, 4) und dem Gehäusedeckel (148) ein Abdeckelement (6) dichtend geklemmt ist, welches einen zwischen der Trennwand (30) und dem Abdeckelement (6) in der Zirkulationskammer (32) ausgebildeten Strömungskanal (40) von dem Pumpkanal (142) trennt und eine Strömungsdurchgangsöffnung (38) hat, durch welche der Strömungskanal (40) mit dem Pumpkanal (142) kommuniziert.

3. Elektrische Heizvorrichtung nach Anspruch 1 oder 2, **dadurch gekennzeichnet,**
**dass** an einer Unterseite der Heizrippen (44) verjüngte Stützstege (70) ausgebildet sind, deren Stirnseiten in einer Abstützebene für das Abdeckelement (6) angeordnet und sind,
**dass** der Gehäusedeckel (148) korrespondierend zu den Stützstegen (70) ausgebildete Stützgegenstege (71) ausbildet und
**dass** das Abdeckelement (6) zwischen den Stützstegen (70) und den Stützgegenstegen (71) geklemmt ist.

4. Elektrische Heizvorrichtung nach einem der vorherigen Ansprüche, **dadurch gekennzeichnet, dass** die Heizrippen (44) alternierend von gegenüberliegenden Innenseiten (46) des Gehäuses nach innen derart abragen, dass der Strömungskanal (40) in dem Gehäuse (2, 4) mäandrierend ausgebildet ist, der Strömungsdurchgänge (56) zwischen den freien Enden der Heizrippen (44) und der benachbarten Innenwand des Gehäuses (2, 4) umfasst.

5. Elektrische Heizvorrichtung nach einem der vorherigen Ansprüche, **dadurch gekennzeichnet, dass** die Heizrippen (44) über einen Steg (48) mit der zugeordneten Innenwand des Gehäuses (2, 4) verbunden ist, der eine geringere Stärke hat als die Heizrippe (44).

6. Elektrische Heizvorrichtung nach einem der vorherigen Ansprüche, **dadurch gekennzeichnet, dass** zu dem Strömungskanal (40) freiliegende Seitenflächen des Steges (48) konkav gekrümmt sind, so dass sich zwischen der Innenwand und der Heizrippe (44) eine muldenförmige Ausbuchtung (50) bildet.

7. Elektrische Heizvorrichtung nach einem der vorherigen Ansprüche, **gekennzeichnet durch** eine sich im Wesentlichen parallel zu der Trennwand (30) erstreckende und in der Anschlusskammer (28) aufgenommene Anschlussleiterplatte (94) mit Leiterbahnen und mit elektrischen Anschlusselementen, die die Trennwand (30) überragenden Kontaktfahnen der PTC-Heizelement (24) kontaktieren, und eine bestückte Leiterplatte(14), die sich im Wesentlichen rechtwinklig zu der Anschlussleiterplatte (94) erstreckend vor einer Stirnseite des Gehäuses (2, 4) vorgesehen ist.

8. Elektrische Heizvorrichtung nach Anspruch 7, **dadurch gekennzeichnet, dass** das Gehäuse (2, 4) an seiner Stirnseite eine sich zu der Anschlusskammer (28) öffnende Gehäuseanschlussöffnung (18) aufweist, in die ein Steckergehäuse (20) eingesetzt ist, dessen elektrische Steckelemente (22) mit Steckgegenelemente (119) verbunden sind, die an der Anschlussleiterplatte (94) bzw. der bestückten Leiterplatte (14) vorgesehen sind.

9. Elektrische Heizvorrichtung nach einem der vorherigen Ansprüche 7 oder 8, **dadurch gekennzeichnet, dass** die bestückte Leiterplatte (14) mit Abstand zu der Stirnseite vorgesehen ist und wenigstens ein Verlustleistung erzeugendes Bauteil (98) trägt und dass zwischen der Stirnseite des Gehäuses (2, 4) und der Leiterplatte (14) ein das Verlustleistung erzeugende Bauteil (98) mit der Stirnseite thermisch koppelndes Kühlelement vorgesehen ist.

10. Elektrische Heizvorrichtung nach einem der Ansprüche 7 bis 9, **dadurch gekennzeichnet, dass** die bestückte Leiterplatte (14) auch Bauteile der Steuervorrichtung für die Pumpe (132) trägt.

11. Elektrische Heizvorrichtung nach einem der vorherigen Ansprüche, **dadurch gekennzeichnet, dass** das Gehäuse (2, 4) an einer Stirnseite einen Anschlussstutzen (36) trägt, der mit dem Strömungskanal (40) kommuniziert und dass das Abdeckelement (6) an seinem dem Anschlussstutzen (36) gegenüberliegenden Ende eine mit dem Strömungskanal (40) kommunizierenden Strömungsdurchgangsöffnung (38) hat.

12. Elektrische Heizvorrichtung nach Anspruch 11, **dadurch gekennzeichnet**, das Pumpgehäuse (134) und das Gehäuse (2, 4) jeweils einen Anschlussstutzen (36) tragen.

13. Elektrische Heizvorrichtung nach einem der vorherigen Ansprüche, **dadurch gekennzeichnet, dass** der Gehäusedeckel (148) und jedenfalls Teile des Pumpgehäuses (134) aus einem Block gebildet sind.

14. Elektrische Heizvorrichtung nach einem der vorherigen Ansprüche so weit von Anspruch 7 abhängig, **gekennzeichnet dadurch** ein Steuergehäuse (10), welches die bestückte Leiterplatte (14) umschließt und eine korrespondierend zu der Gehäuseanschlussöffnung (18) Steuergehäuseanschlussöffnung und eine weitere Steuergehäuseanschlussöffnung ausgebildet, die in Bezug auf eine das Abdeckelement (6) aufnehmende Ebene spiegelsymmetrisch an dem Steuergehäuse (10) ausgespart ist.

## Claims

1. Electrical heating device, in particular for a motor-vehicle, with a housing (2, 4), which encloses a circulation chamber (32) through which a medium can flow, into which heating ribs (44) protrude, which each have a U-shaped recess (34), which open into a uniform connecting chamber (28), which is separated from the circulation chamber (32) by a partition wall (30) provided in the region of the open ends of the U-shaped recesses (34), and accommodates at least one PTC heating element (24), which abuts oppositely situated inner sides (46) of the U-shaped recess (34) in heat-conducting contact,
**characterized by**
a housing cover (148) which bears a pump (132) and forms a pump channel (142), which opens into an inlet opening of the pump (132), which is formed by a pump housing (134).

2. Electrical heating device according to Claim 1, **characterized in that** between the housing (2, 4) and the housing cover (148) a covering element (6) is clamped for sealing, which separates a flow channel (40), formed between the partition wall (30) and the covering element (6) in the circulation chamber (32), from the pump channel (142) and has a flow passage aperture (38), through which the flow channel (40) communicates with the pump channel (142).

3. Electrical heating device according to Claim 1 or 2, **characterized in that** on an underside of the heating ribs (44) tapered supporting ridges (70) are formed, the face sides of which are arranged in a support level for the covering element (6),
that the housing cover (148) forms support counter ridges (71) corresponding to the support ridges (70) and
that the covering element (6) is clamped between the support ridges (70) and the support counter ridges (71).

4. Electrical heating device according to one of the preceding claims, **characterized in that** the heating ribs (44) protrude inwards alternately from the oppositely situated inner sides (46) of the housing such that the flow channel (40) in the housing (2, 4) is formed in a meandering manner and comprises flow passages (56) between the free ends of the heating ribs (44) and the adjacent inner wall of the housing (2, 4).

5. Electrical heating device according to one of the preceding claims, **characterized in that** the heating ribs (44) are connected through a ridge (48) to the assigned inner wall of the housing (2, 4), which is less thick than the heating rib (44).

6. Electrical heating device according to one of the preceding claims, **characterized in that** the exposed lateral faces of the ridge (48) exposed to the flow channel (40) are formed concave, so that a hollow-shaped recess (50) is formed between the inner wall and the heating rib (44).

7. Electrical heating device according to one of the preceding claims, **characterized by** a connecting conductor board (94) extending essentially parallel to the partition wall (30) and accommodated in the connecting chamber (28) with conductive paths and with electrical connecting elements, which make contact with contact lugs (90) of the PTC heating elements (24) protruding over the partition wall (30) and an assembled conductor board (14), which is provided essentially extending at right angles to the connecting conductor board (94) in front of a face side of the housing (2, 4).

8. Electrical heating device according to Claim 7, **characterized in that** on its face side the housing (2, 4) has a housing connection opening (18) which opens to the connecting chamber (28) and in which a plug housing (20) is inserted, the electrical plug elements (22) of which are connected to the plug counter elements (119), which are provided on the connecting conductor board (94) or on the assembled conductor board (14).

9. Electrical heating device according to one of the preceding Claims 7 or 8, **characterized in that** the assembled conductor board (14) is provided with spacing to the face side and bears at least one component (98) producing a power loss, and that between the face side of the housing (2, 4) and the conductor board (14) a selector element is provided thermally coupling the component (98) which produces a power loss to the face side.

10. Electrical heating device according to one of the Claims 7 to 9, **characterized in that** the assembled conductor board (14) also bears components of the control device for the pump (132).

11. Electrical heating device according to one of the preceding claims, **characterized in that** the housing (2, 4) on a face side bears a connection piece (36), which communicates with the flow channel (40) and that on its end situated opposite the connection piece (36) the covering element (6) has a flow passage aperture (38) communicating with the flow channel (40).

12. Electrical heating device according to Claim 11, **characterized in that** the pump housing (134) and the housing (2, 4) each bear a connection piece (36).

13. Electrical heating device according to one of the preceding claims, **characterized in that** the housing cover (148) and in any case parts of the pump housing (134) are formed from one block.

14. Electrical heating device according to one of the preceding claims, so far dependent on Claim 7, **characterized by** a control housing (10), which encloses the assembled conductor board (14) and forms a control housing connection opening corresponding to the housing connection opening (18) and a further control housing connection opening, which in relation to a level accommodating the covering element (6) is formed mirrored on the control housing (10).

## Revendications

1. Dispositif de chauffage électrique, notamment pour un véhicule automobile, comprenant un carter (2, 4) enfermant une chambre de circulation (32) à travers laquelle peut s'écouler un fluide et dans laquelle s'engagent des ailettes de chauffage (44) pourvues chacune d'un évidement (34) en forme de U, qui s'ouvrent vers une chambre de raccordement (28) unitaire qui est séparée de la chambre de circulation (32) par une paroi de séparation (30) de la chambre de circulation (32), prévue dans la zone des extrémités ouvertes des évidements (34) en forme de U, et accueille au moins un élément chauffant PTC (24) (à coefficient de température positif), s'appuyant par un contact de conduction thermique contre des côtés intérieurs (46) opposés de l'évidement (34) en forme de U,
**caractérisé par**
un couvercle de carter (148) qui porte une pompe (132) et forme un canal de pompe (142) débouchant dans une ouverture d'entrée de la pompe (132) formée à travers un carter de pompe (134).

2. Dispositif de chauffage électrique selon la revendication 1, **caractérisé en ce qu'**entre le carter (2, 4) et le couvercle de carter (148) est enserré de manière étanche, un élément de recouvrement (6), qui sépare un canal d'écoulement (40) formé dans la chambre de circulation (32) entre la paroi de séparation (30) et l'élément de recouvrement (6), du canal de pompe (142), et qui possède une ouverture de passage d'écoulement (38) par laquelle le canal d'écoulement (40) communique avec le canal de pompe (142).

3. Dispositif de chauffage électrique selon la revendication 1 ou la revendication 2, **caractérisé en ce que** sur un côté inférieur des ailettes de chauffage (44) sont formées des nervures d'appui (70) rétrécies, dont les côtés frontaux sont agencés dans un plan d'appui pour l'élément de recouvrement (6),
**en ce que** le couvercle de carter (148) forme des nervures d'appui conjuguées (71) en correspondance avec les nervures d'appui (70), et
**en ce que** l'élément de recouvrement (6) est enserré entre les nervures d'appui (70) et les nervures d'appui conjuguées (71).

4. Dispositif de chauffage électrique selon l'une des revendications précédentes, **caractérisé en ce que** les ailettes de chauffage (44) font saillie vers l'intérieur de manière alternée à partir de côtés intérieurs opposés (46) du carter, de manière telle que le canal d'écoulement (40) présente une configuration en forme de méandres dans le carter (2, 4), et présente des passages d'écoulement (56) entre les extrémités libres des ailettes de chauffage (44) et la paroi intérieure voisine du carter (2, 4).

5. Dispositif de chauffage électrique selon l'une des revendications précédentes, **caractérisé en ce que** l'ailette de chauffage (44) est reliée à la paroi intérieure associée du carter (2, 4), par l'intermédiaire d'une nervure (48) qui présente une épaisseur moindre que l'ailette de chauffage (44).

6. Dispositif de chauffage électrique selon l'une des revendications précédentes, **caractérisé en ce que** des surfaces latérales de la nervure (48) dégagées vers le canal d'écoulement (40), présentent une courbure concave, de sorte qu'entre la paroi intérieure et l'ailette de chauffage (44) est formé un évidement (50) en forme d'auge.

7. Dispositif de chauffage électrique selon l'une des revendications précédentes, **caractérisé par** une plaque de circuit imprimé de raccordement (94), qui s'étend sensiblement de manière parallèle à la paroi de séparation (30), est logée dans le compartiment de raccordement (28), et comporte des pistes conductrices et des éléments de raccordement électrique venant contacter les fiches de contact des éléments chauffants PTC (24) dépassant de la paroi de séparation (30), et une plaque de circuit imprimé (14) équipée de composants est prévue devant un côté frontal du carter (2, 4) en s'étendant sensiblement de manière perpendiculaire à la plaque de circuit imprimé de raccordement (94).

8. Dispositif de chauffage électrique selon la revendication 7, **caractérisé en ce que** le carter (2, 4) présente sur un côté frontal, une ouverture de raccordement de carter (18) s'ouvrant vers le compartiment de raccordement (28), et dans laquelle est engagé un boitier de connexion (20) dont les éléments de connexion électrique (22) sont reliés à des éléments de connexion conjugués (119), qui sont prévus sur la plaque de circuit imprimé de raccordement (94) ou la plaque de circuit imprimé (14) équipée de composants.

9. Dispositif de chauffage électrique selon l'une des revendications précédentes 7 ou 8, **caractérisé en ce que** la plaque de circuit imprimé (14) équipée de composants est prévue à distance du côté frontal et porte au moins un composant (98) produisant de la puissance dissipée, et **en ce qu'**entre le côté frontal du carter (2, 45) et la plaque de circuit imprimé (14), il est prévu un élément de refroidissement assurant le couplage thermique du composant (98) produisant de la puissance dissipée, avec le côté frontal.

10. Dispositif de chauffage électrique selon l'une des revendications 7 à 9, **caractérisé en ce que** la plaque de circuit imprimé (14) équipée de composants porte également des composants du dispositif de commande pour la pompe (132).

11. Dispositif de chauffage électrique selon l'une des revendications précédentes, **caractérisé en ce que** le carter (2, 4) porte, sur un côté frontal, un embout de raccordement (36), qui communique avec le canal d'écoulement (40), et **en ce que** l'élément de recouvrement (6) possède, à son extrémité opposée à l'embout de raccordement (36), une ouverture de passage d'écoulement (38) communiquant avec le canal d'écoulement (40).

12. Dispositif de chauffage électrique selon la revendication 11, **caractérisé en ce que** le carter de pompe (134) et le carter (2, 4) portent chacun un embout de raccordement (36).

13. Dispositif de chauffage électrique selon l'une des revendications précédentes, **caractérisé en ce que** le couvercle de carter (148) et en tout cas des parties du carter de pompe (134) sont formés d'un seul bloc.

14. Dispositif de chauffage électrique selon l'une des revendications précédentes dans la mesure où elles dépendent de la revendication 7, **caractérisé par** un carter de commande (10), qui entoure la plaque de circuit imprimé (14) équipée de composants, et forme une ouverture de raccordement de carter de commande en correspondance avec l'ouverture de raccordement de carter (18), ainsi qu'une ouverture de raccordement de carter de commande supplémentaire, qui est évidée dans le carter de commande (10) de manière symétrique par réflexion par rapport à un plan contenant l'élément de recouvrement (6).
